# EUROPÄISCHE PATENTSCHRIFT

(11) **EP 1 663 682 B1**
(45) Veröffentlichungstag und Bekanntmachung des Hinweises auf die Patenterteilung: **30.12.2009**
(21) Anmeldenummer: 04763800.2
(22) Anmeldetag: 04.08.2004
(51) Int. Cl.: B60H 1/34

(54) **LUFTAUSSTRÖMER, INSBESONDERE FÜR EIN KRAFTFAHRZEUG**
AIR VENT, PARTICULARLY FOR A MOTOR VEHICLE
DISPOSITIF DE COULEMENT D'AIR, NOTAMMENT POUR UN VEHICULE

(30) Priorität: 08.09.2003 DE 10341735
(43) Veröffentlichungstag der Anmeldung: 07.06.2006
(73) Patentinhaber: Behr GmbH & Co. KG, 70469 Stuttgart (DE)
(72) Erfinder: ENGELHARDT, Martin, 71696 Möglingen (DE); VOIGT, Klaus, 74321 Bietigheim-Bissingen (DE); KLINGLER, Dietrich, 73540 Heubach (DE)
(86) Internationale Anmeldenummer: PCT/EP2004/008753
(87) Internationale Veröffentlichungsnummer: WO 2005/028226

(56) Entgegenhaltungen:
- EP-A- 1 223 061
- DE-A- 19 739 652
- DE-A- 19 758 275
- US-A- 5 328 152

## Beschreibung

Die Erfindung betrifft einen Luftausströmer, insbesondere für ein Kraftfahrzeug, gemäß dem Oberbegriff des Anspruchs 1, und wie in DE 197 58 275 A1 offenbart.

Aus der EP 1 223 061 A2 ist ein Luftausströmer, insbesondere zur Fahrzeugklimatisierung, mit einem Rahmen, mehreren Lamellen, die um eine erste Achse verschwenkbar angeordnet sind, und mindestens einem Koppelelement, mit dem jede der Lamellen gekoppelt ist, wobei das Koppelelement relativ zur ersten Achse zwischen einer Neutralstellung, in der die Lamellen zueinander parallel sind, und einer Komfortstellung verstellbar sind, in der mindestens ein Teil der Lamellen in zueinander entgegengesetzter Richtung verschwenkbar ist. Der Luftausströmer ist vor einem Luftkanal angeordnet, aus dem ein Luftstrom austritt, dessen Richtung mit Hilfe des Luftausströmers eingestellt werden kann. Dabei kann der Luftstrom mit Hilfe der zueinander entgegengesetzt verschwenkten Lamellen aufgefächert werden, so dass ein divergierender Luftstrom erzeugt wird, in welchem geringere Strömungsgeschwindigkeiten herrschen als bei einem Luftstrom mit konstantem Querschnitt, so dass auch bei einem hohen Luftdurchsatz verhindert werden kann, dass der austretende Luftstrom mit hohen Geschwindigkeiten auf einen Fahrzeuginsassen auftrifft.

Aus der WO 99/07569 ist ferner eine Belüftungsvorrichtung bekannt, wobei einem Haupt-Luftstrom mittels Klappen geregelt zwei oder mehr Teil-Luftströme abzweigbar sind, welche im Bereich der Ausströmöffnung dem Haupt-Luftstrom wieder zuführbar sind, so dass die Teil-Luftströme den Haupt-Luftstrom bei Bedarf seitlich ablenken. Hierfür sind die einzelnen Luftkanäle der Teil-Luftströme in der Ebene der normalen Strömungsrichtung des Haupt-Luftstroms liegend in einem Bogen zum Haupt-Luftstrom geführt, so dass bei geöffneter Klappe der entsprechende Teil-Luftstrom in einem Winkel zur Haupt-Luftstrom diesem zugeführt wird, und der Haupt-Luftstrom durch den Teil-Luftstrom seitlich abgelenkt wird.

Ferner zeigt die DE 197 39 652 eine Beluftungseinrichtung mit zwei Drosselelementen die relativ zueinander beweglich sind, so dass der Austrittsquerschnitt variiert werden kann.

Derartige Vorrichtungen lassen jedoch noch Wünsche offen, insbesondere in Hinblick auf die Herstellungskosten.

Es ist Aufgabe der Erfindung, einen verbesserten Luftausströmer zur Verfügung zu stellen.

Diese Aufgabe wird gelöst durch einen Luftausströmer mit den Merkmalen des Anspruchs 1. Vorteilhafte Ausgestaltungen sind Gegenstand der Unteransprüche.

Erfindungsgemäß ist ein Luftausströmer, insbesondere für ein Kraftfahrzeug, mit einer in einem Strömungskanal angeordneten Ablenkvorrichtung vorgesehen, wobei die Ablenkvorrichtung zwischen einem vorderen Bereich und einem hinteren Bereich des Strömungskanals vor einer Richtungs- und/oder Querschnittsformänderung des Strömungskanals angeordnet ist. Dabei dient die Ablenkvorrichtung der Erzeugung eines Dralls, welcher die Ausströmcharakteristik des Luftausströmers verändert. Vorzugsweise kann die Ausströmcharakteristik hierbei zwischen einer Streucharakteristik (diffuse Strömung) und einer Spotcharakteristik (gerichtete Strömung) verändert werden. Der einstellbare Drall kann dabei zwischen einem maximalen Wert bei der Streucharakteristik und einem minimalen Wert bei der Spotcharakteristik eingestellt werden.

Bevorzugt weist der hintere Bereich des Strömungskanals einen zylinderförmigen Querschnitt und der vordere Bereich des Strömungskanals einen rechteckförmigen Querschnitt auf. Dabei sind die beiden Bereiche des Strömungskanals insbesondere in einem Winkel zueinander angeordnet, wobei der Winkel bevorzugt 90° beträgt.

Die Ablenkvorrichtung ist durch einen rechteckförmigen, flachen Schieber gebildet, der bei einer Verschiebung eine kombinierte Längs-SchwenkBewegung durchläuft, wobei eine Seite in jeder Stellung des Schiebers an einer Wand des vorderen Strömungskanals oder wandnah hierzu angeordnet ist, so dass auf der gegenüberliegenden Seite, außer in der vollständig geöffneten Stellung, ein verengter Bereich des Strömungskanals freigegeben ist. Der Schieber ist vorzugsweise in jeder seiner Stellungen parallel zur Längsachse des hinteren Bereichs des Strömungskanals angeordnet.

Bevorzugt ist der hintere Bereich des Strömungskanals durch eine um ihre Längsachse drehbare Trommel gebildet. Dabei kann die Trommel durch eine oder mehrere entsprechend gestaltete Öffnungen in ihrer Umfangswand selbst die Ablenkvorrichtung bilden oder aber mit einer anderen an einer Seite der Öffnung angebrachten Ablenkvorrichtung, die vorzugsweise als Schieber ausgebildet ist, zusammenwirken.

Die Öffnung in der Trommel weist vorzugsweise eine sich über den halben Umfang der Trommel erstreckende Öffnung auf, wodurch im Falle eines direkten Übergangs der Luftströmung aus dem vorderen Bereich in den hinteren Bereich des Strömungskanals kein Drall ausbildet und eine gerichtete Strömung ausbildet.

Im Folgenden wird die Erfindung anhand dreier Ausführungsbeispiele unter Bezugnahme auf die Zeichnung im Einzelnen erläutert. Es zeigen:
- Fig. 1: eine geschnittene Ansicht des ersten Ausführungsbeispiels in einer Diffusstellung,
- Fig. 2: eine geschnittene Ansicht des ersten Ausführungsbeispiels in einer Zwischenstellung,
- Fig. 3: eine geschnittene Ansicht des ersten Ausführungsbeispiels in einer Spotstellung,
- Fig. 4: eine Ansicht des ersten Ausführungsbeispiels,
- Fig. 5: eine schematische Darstellung der Strömungsverläufe im Austrittsbereich des Luftausströmers,
- Fig. 6: eine zweite, Fig. 5 entsprechende Darstellung aus einer anderen Perspektive mit angedeutetem Schwenkbereich durch ein der Dralldüse nachgeordnetes Gitter,
- Fig. 7: eine geschnitten dargestellte Draufsicht auf das zweite nicht erfindungsgemäße Beispiel in einer Diffusstelllung,
- Fig. 8: eine geschnitten dargestellte Draufsicht auf das zweite Beispiel in einer Zwischenstelllung,
- Fig. 9: eine geschnitten dargestellte Draufsicht auf das zweite Beispiel in einer Spotstelllung,
- Fig. 10: eine geschnitten dargestellte Draufsicht auf das dritte nicht erfindungsgemäße Beispiel in einer Diffusstelllung,
- Fig. 11: eine geschnitten dargestellte Draufsicht auf das dritte Beispiel in einer Zwischenstelllung, und
- Fig. 12: eine geschnitten dargestellte Draufsicht auf das dritte Beispiel in einer Spotstelllung.

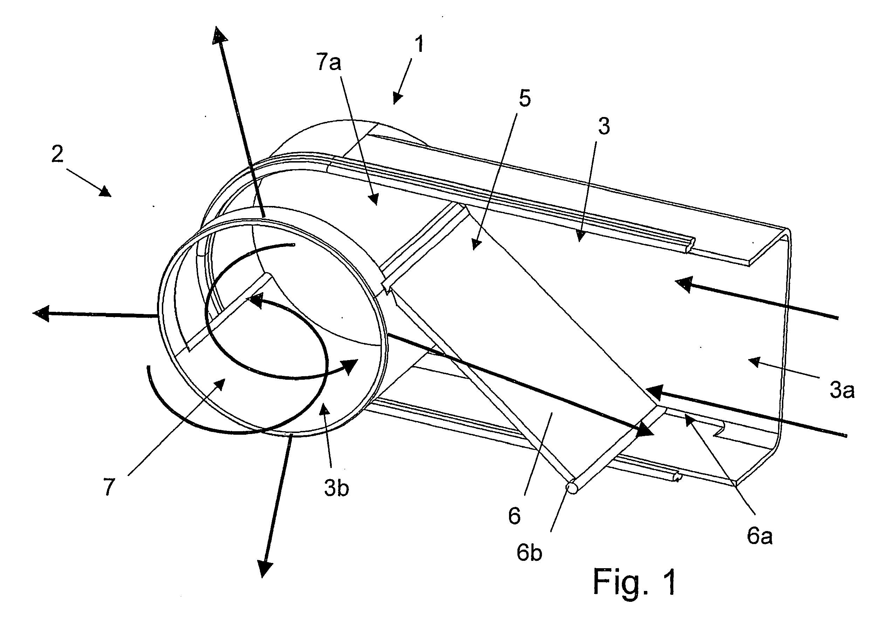

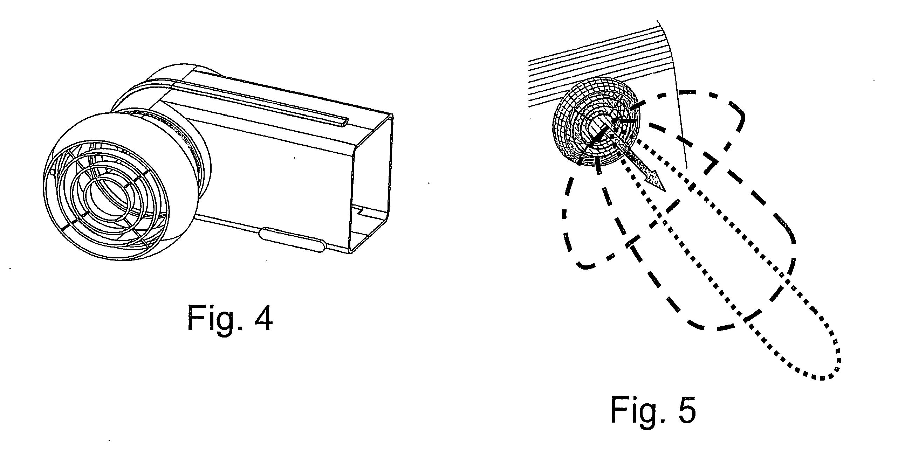

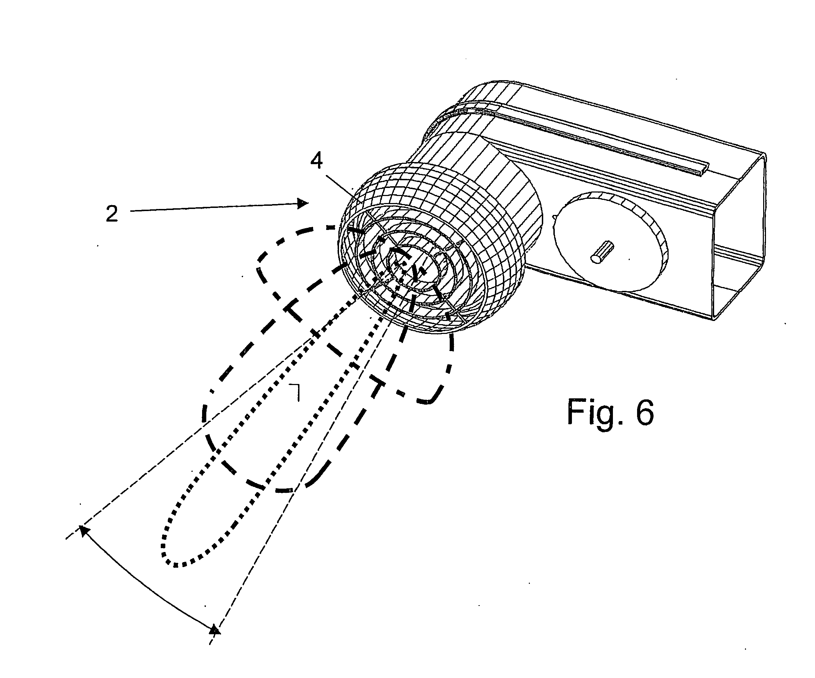

Fig. 1 zeigt eine Dralldüse 1 eines Luftausströmers 2, welcher einen Strömungskanal 3 aufweist. Der Strömungskanal 3 hat in seinem vorderen Bereich 3a einen im Wesentlichen rechteckförmigen Querschnitt. Der Strömungskanal 3 mündet seitlich in einem zylinderförmigen hinteren Bereich 3b, welcher an seinem offenen Ende ein Gitter 4 trägt (siehe Fig. 4). Das Gitter 4 ist im Armaturenbrett eines Kraftfahrzeuges angeordnet und dient der Richtungseinstellung (siehe Fig. 6).

Im vorderen Bereich 3a des Strömungskanals 3 ist eine Ablenkvorrichtung 5 in Form eines rechteckförmigen, flachen Schiebers 6 ausgebildet, welcher in Führungsbahnen 6a geführt verschiebbar ist. Hierfür sind am Schieber 6 am vorderen Ende jeweils seitlich vorstehende Zapfen 6b vorgesehen, welche in den entsprechend ausgebildeten Führungsbahnen 6a aufgenommen sind. Zwei Führungsbahnen 6a verlaufen im vorderen Bereich 3a des Strömungskanals 3 in Längsrichtung einer Seitenfläche desselben. Das hintere Ende des Schiebers 6 ist schwenkbar mit einer den hinteren Bereich 3b des Strömungskanal 3 bildenden Trommel 7 verbunden, welche drehbar gelagert ist, so dass bei einer Drehung der Trommel 7 eine Verschiebung der Zapfen 6b in den Führungsbahnen 6a und eine Neigungsänderung des Schiebers 6 erfolgt. In der Trommel 7 ist eine Öffnung 7a vorgesehen, welche die Verbindung zwischen dem vorderen Bereich 3a und dem hinteren Bereich 3b des Strömungskanals 3 bildet.

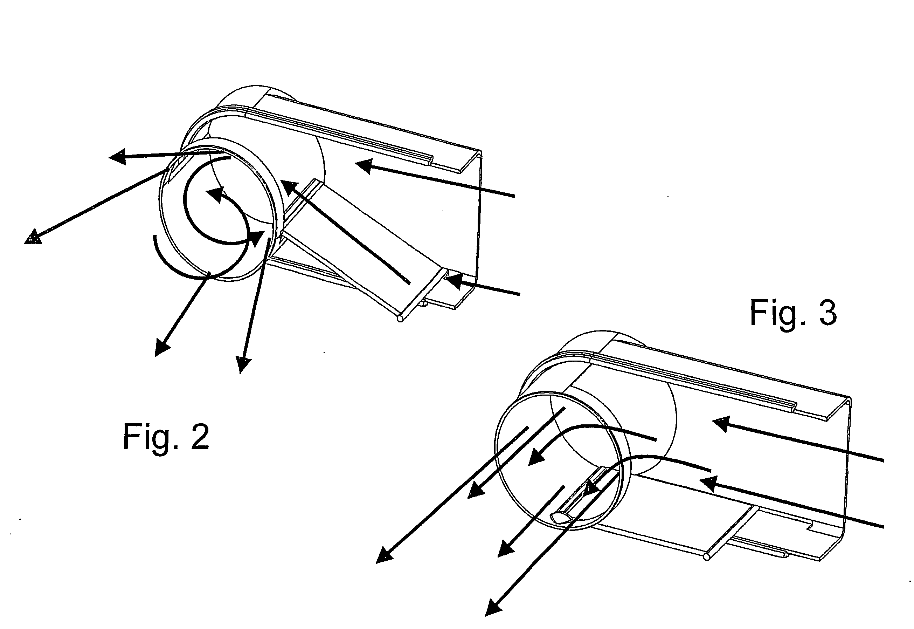

Die Funktion der Dralldüse 1 ist im Folgenden unter Bezugnahme auf die Figuren 1 bis 3 näher erläutert. Dabei ist der Strömungsverlauf in der Dralldüse 1 in den Figuren 1 bis 3 durch Pfeile dargestellt.

Fig. 1 zeigt eine Diffusstellung, d.h. der durch den Strömungskanal 3 kommende Luftstrom wird durch den Schieber 6 abgelenkt und stark beschleunigt, so dass er entlang dem Umfang in den hohlzylindrischen hinteren Bereich 3b des Strömungskanal 3 eintritt und einen entsprechenden starken Drall in Umfangsrichtung erhält. In Verbindung mit der Umlenkung um 90° zwischen dem vorderen und hinteren Bereich des Strömungskanals 3 bildet sich eine diffuse Strömung aus (siehe Fig. 5 und 6 Strich-Punkt-Linie).

Wird die Trommel 7 im Uhrzeigersinn etwas gedreht, so verringert sich die Neigung des Schiebers 6 und dadurch die Ablenkung des Luftstroms. Ein Teil des Luftstroms gelangt entlang des Umfangs in den hohlzylindrischen hinteren Bereich 3b des Strömungskanals 3, jedoch kann auch ein Teil des Luftstroms auf direktem Weg in den mittleren Bereich des hohlzylindrischen hinteren Bereichs 3b gelangen, welcher keinen oder nur einen geringen Drall erhält, so dass sich eine Strömung ergibt, die zwischen der diffusen und gerichteten Strömung liegt (siehe Fig. 5 und 6 Strichlinie).

Wird die Trommel 7 bis zum Anschlag im Uhrzeigersinn gedreht (Spotstellung), so gelangt der Schieber 6 in Anlage an die Seitenwand des vorderen Bereichs 3a des Strömungskanals 3, so dass keine Ablenkung durch den Schieber 6 erfolgt. Der Luftstrom kann direkt über die gesamte Breite der Öffnung 7a in den hinteren Bereich 3b des Strömungskanals 3 eintreten, wobei in diese Stellung vollständig die freigegebene Öffnung 7a in der Trommel 7 einen Winkel von etwa 180° des hohlzylindrischen hinteren Bereichs 3b einnimmt, so dass die Luft lediglich im rechten Winkel umgelenkt wird und sich keine Strömung in Umfangsrichtung der Trommel 7 ausbildet und eine gerade, gerichtete Strömung (Spotströmung) austritt (siehe Fig. 5 und 6 gepunktete Linie).

Der Luftstrahl, welcher durch die Dralldüse 1 vorgegeben ist, kann mittels des Gitters 4, welches gemäß dem Ausführungsbeispiel Teil des Luftausströmers 2 ist, in einem vorgegebenen Schwenkbereich (siehe Fig. 6) eingestellt werden.

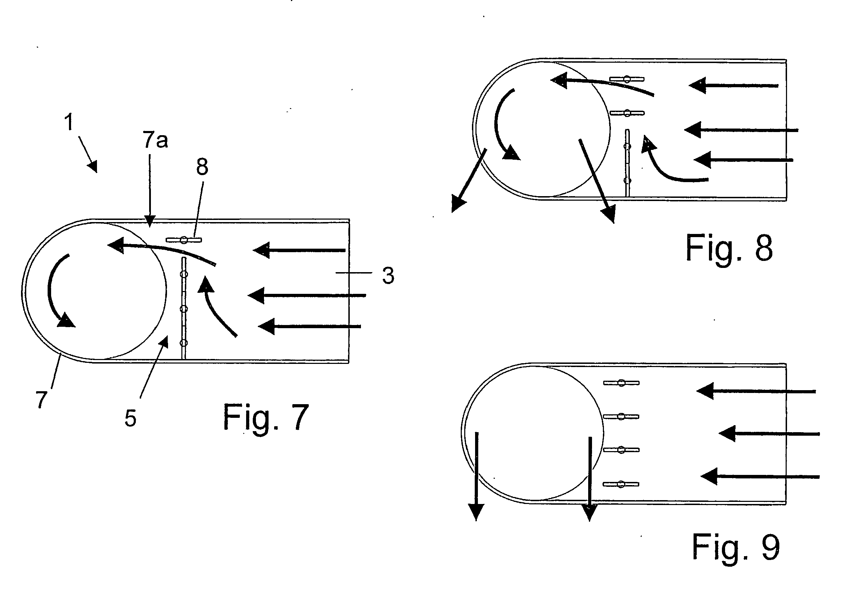

Die Figuren 7 bis 9 zeigen ein Beispiel einer Dralldüse 1, wobei als Ablenkvorrichtung 5 vier schwenkbare, nebeneinander angeordnete Klappen 8 angeordnet sind, die einzeln angesteuert werden können. Die Trommel 7 muss in diesem Fall nicht verdrehbar ausgebildet sein, vielmehr ist die Öffnung 7a zwischen dem vorderen und hinteren Bereich des Strömungskanals 3 selbst unveränderlich und erstreckt sich über den halben Umfang der Trommel 7.

Je nach Anzahl und Lage der offenen Klappen 8 bildet sich eine diffuse (Fig. 7), eine gemischte (Fig. 8) oder eine gerichtete (Fig. 9) Strömung aus. Die Klappen 8 werden dabei derart angesteuert, dass stets zuerst eine seitliche Klappe 8, anschließend die benachbarte Klappe 8 und so weiter geöffnet wird. Das Schließen erfolgt in umgekehrter Reihenfolge.

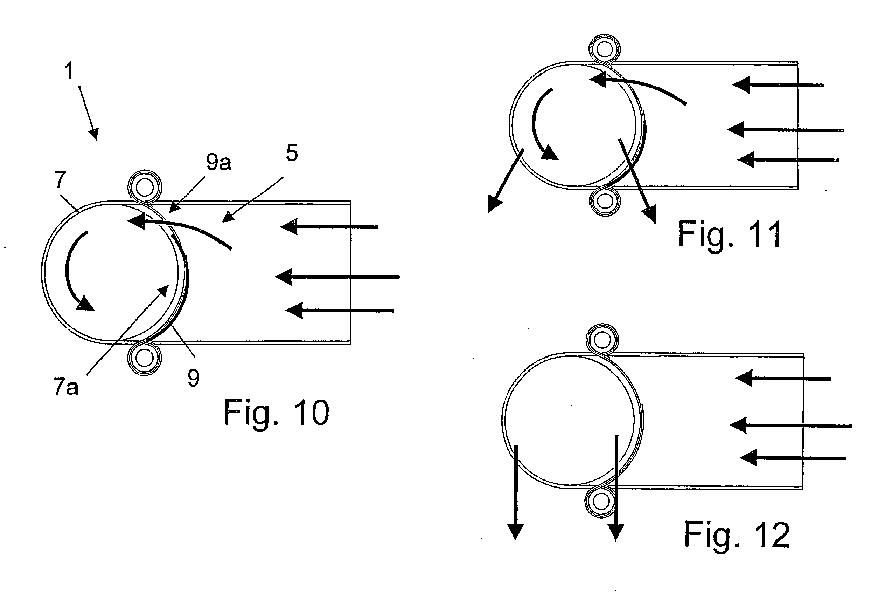

Die Figuren 10 bis 12 zeigen ein Beispiel, bei der die Ablenkvorrichtung 5 durch ein Rollband 9 mit einer entsprechend ausgebildeten Öffnung 9a gebildet, welche in ihren Abmessungen etwa der Öffnung 7a der Trommel 7 entspricht. Vorliegend wird das Rollband 9 derart geführt, dass es einen bogenförmigen Verlauf hat, was beispielsweise mittels eines entsprechend ausgebildeten Gitters, weiches in der Trommel 7 angeordnet ist und einen Teil der Wand bildet, verwirklicht werden.

### Bezugszeichenliste

- 1: Dralldüse
- 2: Luftausströmer
- 3: Strömungskanal
- 3a: vorderer Bereich
- 3b: hinterer Bereich
- 4: Gitter
- 5: Ablenkvorrichtung
- 6: Schieber
- 6a: Führungsbahn
- 6b: Zapfen
- 7: Trommel
- 7a: Öffnung
- 8: Klappe
- 9: Rollband
- 9a: Öffnung

## Patentansprüche

1. Luftausströmer, insbesondere für ein Kraftfahrzeug, mit einer in einem Strömungskanal (3) angeordneten Ablenkvorrichtung (5) die zwischen einem vorderen Bereich (3a) und einem zylinderförmigen hinteren Bereich (3b) des Strömungskanals (3) vor einer Richtungs- und/oder Querschnittsformänderung des Strömungskanals (3) angeordnet ist, wobei der vordere Bereich (3a) des Strömungskanals seitlich in den hinteren Bereich (3b) mündet und die Ablenkvorrichtung (5) in einer Einstellung einen Luftstrom entlang des Umfangs des hohlzylindrischen hinteren Bereichs (3b) lenkt und ihm einen entsprechend starken Drall in Umfangsrichtung erteilt, **dadurch gekennzeichnet, dass** die Ablenkvorrichtung (5) durch einen rechteckförmigen, flachen Schieber (6) gebildet ist, der bei einer Verschiebung eine kombinierte Längs-Schwenk-Bewegung durchläuft, wobei eine Seite in jeder Stellung des Schiebers (6) an einer Wand des vorderen Strömungskanals (3a) oder wandnah hierzu angeordnet ist.

2. Luftausströmer nach Anspruch 1, **dadurch gekennzeichnet, dass** der flache Schieber in Führungsbahnen (6a) geführt verschiebbar ist.

3. Luftausströmer nach Anspruch 1 oder 2, **dadurch gekennzeichnet, dass** der vordere Bereich (3a) des Strömungskanals (3) einen rechteckförmigen Querschnitt aufweist.

4. Luftausströmer nach einem der vorhergehenden Ansprüche, **dadurch gekennzeichnet, dass** der hintere Bereich (3b) des Strömungskanals (3) in einem Winkel von 90° zum vorderen Bereich (3a) des Strömungskanals (3) angeordnet ist.

5. Luftausströmer nach einem der vorhergehenden Ansprüche, **dadurch gekennzeichnet, dass** der hintere Bereich (3b) des Strömungskanals (3) durch eine drehbare Trommel (7) gebildet ist.

6. Luftausströmer nach Anspruch 5, **dadurch gekennzeichnet, dass** die Trommel (7) eine über den halben Umfang derselben sich erstreckende Öffnung (7a) aufweist.

7. Belüftungssystem für ein Kraftfahrzeug, **gekennzeichnet durch** mindestens einen Luftausströmer (2) gemäß einem der Ansprüche 1 bis 6.

## Claims

1. Air outlet, in particular for a motor vehicle, comprising a deflecting device (5) located in a flow duct (3) between a front region (3a) and a cylindrical rear region (3b) of the flow duct (3) upstream of a change in the direction and/or the cross-sectional shape of the flow duct (3), wherein the front region (3a) or the flow duct terminates laterally in the rear region (3b) and wherein the deflecting device in one setting guides an airflow along the circumference of the hollow cylindrical rear region (3b) while imparting a correspondingly strong swirl in the circumferential direction, **characterised in that** the deflecting device (5) is represented by a rectangular flat slide (6) which, when being displaced, carries out a combined longitudinal and pivoting motion, one side in each position of the slide (6) being placed at or near a wall of the front flow duct (3a).

2. Air outlet according to claim 1, **characterised in that** the flat slide is movably guided in guideways (6a).

3. Air outlet according to claim 1 or 2, **characterised in that** the front region (3 a) of the flow duct (3) has a rectangular cross-section.

4. Air outlet according to any of the preceding claims, **characterised in that** the rear region (3b) of the flow duct (3) is oriented at an angle of 90 degrees relative to the front region (3a) of the flow duct (3).

5. Air outlet according to any of the preceding claims, **characterised in that** the rear region (3b) of the flow duct (3) is represented by a rotatable drum (7).

6. Air outlet according to claim 5, **characterised in that** the drum (7) has an opening (7a) extending over half of its circumference.

7. Ventilation system for a motor vehicle, **characterised** at lest one air outlet (2) according to any of claims 1 to 6.

## Revendications

1. Diffuseur d'air, en particulier pour un véhicule automobile, comprenant un dispositif déflecteur (5) disposé dans un conduit d'écoulement (3), dispositif déflecteur qui est disposé en amont d'une modification de direction et / ou d'une modification de la forme de section du conduit d'écoulement (3), entre une zone avant (3a) et une zone arrière (3b) - en forme de cylindre - du conduit d'écoulement (3), où la zone avant (3a) du conduit d'écoulement débouche latéralement dans la zone arrière (3b), et le dispositif déflecteur (5), suivant un réglage, guide un flux d'air le long de la circonférence de la zone arrière (3b) de forme cylindrique creuse, et fournit en conséquence, à ladite zone, un puissant tourbillon dans la direction circonférentielle,
**caractérisé en ce que** le dispositif déflecteur (5) est formé par un coulisseau plat (6), de forme rectangulaire, qui, lors d'un déplacement, effectue, de façon combinée, un mouvement longitudinal et pivotant où, dans chaque position du coulisseau (6), un côté est disposé contre une paroi du conduit d'écoulement avant (3a) ou à proximité de la paroi dudit conduit d'écoulement avant.

2. Diffuseur d'air selon la revendication 1, **caractérisé en ce que** le coulisseau plat est mobile en étant guidé dans des glissières de guidage (6a).

3. Diffuseur d'air selon la revendication 1 ou 2, **caractérisé en ce que** la zone avant (3a) du conduit d'écoulement (3) présente une section de forme rectangulaire.

4. Diffuseur d'air selon l'une quelconque des revendications précédentes, **caractérisé en ce que** la zone arrière (3b) du conduit d'écoulement (3) est disposée en formant un angle de 90° par rapport à la zone avant (3a) du conduit d'écoulement (3).

5. Diffuseur d'air selon l'une quelconque des revendications précédentes, **caractérisé en ce que** la zone arrière (3b) du conduit d'écoulement (3) est formée par un tambour rotatif (7).

6. Diffuseur d'air selon la revendication 5, **caractérisé en ce que** le tambour (7) présente une ouverture (7a) s'étendant sur la demi-circonférence dudit tambour.

7. Système de ventilation pour un véhicule automobile, **caractérisé par** au moins un diffuseur d'air (2) selon l'une quelconque des revendications 1 à 6.
